# EUROPÄISCHE PATENTSCHRIFT

(11) **EP 4 360 812 B1**
(45) Veröffentlichungstag und Bekanntmachung des Hinweises auf die Patenterteilung: **26.08.2026**
(21) Anmeldenummer: 22203272.4
(22) Anmeldetag: 24.10.2022
(51) Int. Cl.: B25J 5/00, B25J 19/00, B25J 11/00, B25J 13/08

(54) **UNIVERSELL EINSETZBARER, MOBILER BAUROBOTER MIT TEMPERIERERTEM MANIPULATOR**
UNIVERSALLY APPLICABLE MOBILE CONSTRUCTION ROBOT WITH A TEMPERATURE-CONTROLLED MANIPULATOR
ROBOT DE CONSTRUCTION MOBILE UNIVERSEL AVEC UN MANIPULATEUR A RÉGULATION DE TEMPÉRATURE

(43) Veröffentlichungstag der Anmeldung: 01.05.2024
(73) Patentinhaber: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(56) Entgegenhaltungen:
- EP-A1- 1 136 196
- EP-A1- 3 982 307
- CN-A- 112 405 489
- CN-A- 113 770 999
- DE-U1- 202005 002 475
- RU-C2- 2 525 008
- US-A1- 2013 268 117

## Beschreibung

Die Erfindung betrifft einen Bauroboter, umfassend eine mobile Plattform, einen ein- oder mehrachsigen Manipulator und eine am Manipulator befindliche Werkzeugmaschine, gemäß der Präambel von Anspruch 1 und wie aus EP 3 982 307 A1 bekannt.

Ein solcher Bauroboter kann erheblich zu einer fristgerechten Umsetzung von Bauprojekten beitragen. Gesundheitsbelastungen und Gesundheitsschädigungen von Bauarbeitern können minimiert oder gar gänzlich vermieden werden.

Aufgrund hoher Investitionskosten ist es jedoch für einen wirtschaftlichen Betrieb wünschenswert, wenn der Bauroboter möglichst vielseitig einsetzbar ist. Es ist eine Aufgabe der vorliegenden Erfindung, hierfür gegenständliche Lösungen und geeignete Verfahren anzubieten.

Die Aufgabe wird gelöst durch einen **Bauroboter,** umfassend eine mobile Plattform, einen ein- oder mehrachsigen Manipulator und eine am Manipulator befindliche Werkzeugmaschine, wobei der Bauroboter einen Temperierer aufweist, der eingerichtet ist, den Manipulator zu erwärmen, zu kühlen und / oder eine Temperatur des Manipulators in einem Temperaturbereich zu halten.

Dieser Lösung liegt dabei unter anderem die Erkenntnis zugrunde, dass der Manipulator ein mechanisch komplexes und mechanisch hoch belastetes Teil darstellt mit vielen gegeneinander bewegten Elementen. Daher bestehen insbesondere beim Manipulator hohe Anforderungen an Lagerung, Schmierung und dergleichen. Diese Anforderungen führen häufig zu einem eingeschränkten Temperaturbereich, in dem der Manipulator und damit der Bauroboter insgesamt verwendbar ist.

Ein solcher zulässiger Temperaturbereich eines Manipulators kann beispielsweise von 5°C bis 35°C reichen.

Ein solcher Manipulator kann durch den Temperierer in seinem zulässigen Temperaturbereich gehalten werden, auch wenn eine Umgebungstemperatur außerhalb dieses zulässigen Temperaturbereichs liegt. Somit kann der Bauroboter insgesamt in besonders vielfältigen Umgebungsbedingungen eingesetzt werden. Insbesondere kann er in besonders vielen Regionen der Welt und während eines Großteils eines Jahres, auch im Freien, einsetzbar sein. Sein Auslastungsgrad und damit seine Wirtschaftlichkeit können gesteigert werden.

Der Temperaturbereich, auf den der Temperierer regelt, kann nach oben und / oder nach unten begrenzt sein; er kann also einer Maximaltemperatur, einer Minimaltemperatur oder einem Temperaturband entsprechen.

Für einen hohen Autonomiegrad des Bauroboters kann die mobile Plattform motorisiert sein. Sie kann ein Räderfahrwerk, ein Kettenfahrwerk und / oder eine Flugplattform umfassen.

Der Bauroboter kann zur Ausführung von Bauarbeiten im Hochbau und / oder Tiefbau eingerichtet sein.

Gerade bei mobilen Baurobotern, die beispielsweise Akku-betrieben sein können, steht Energie nur begrenzt zur Verfügung. Zur Steigerung der Energieeffizienz und damit einer unterbrechungsfreien Nutzungsdauer des Bauroboters kann der Temperierer in Abhängigkeit des tatsächlichen Bedarfs zur Temperierung des Manipulators steuerbar sein. Dazu weist der Bauroboter einen Temperatursensor zur Messung einer Temperatur des Bauroboters und / oder einer Umgebung des Bauroboters auf. Abhängig von der Temperatur kann dann der Temperierer aktivierbar, deaktivierbar und / oder in seiner Leistung steuerbar sein.

Der Temperierer kann wenigstens ein Peltierelement aufweisen. So kann er eingerichtet sein, den Manipulator je nach Wahl zu kühlen oder zu erwärmen.

Der Temperierer umfasst eine Hülle, die den Manipulator zumindest teilweise einhüllt. So kann eine vom Temperierer erzeugte Wärme- und / oder Kälteleistung ohne größere Verluste an den Manipulator geleitet werden.

Die Hülle kann eine Nanopartikel-haltige Schicht aufweisen. Die Nanopartikel-haltige Schicht kann nach dem Lotus-Effekt wirken. Sie kann Wasser-, Schmutz- und / oder Staub-abweisend sein. Sie kann beispielsweise mindestens die Schutzart IP 65, beispielsweise IP 66, jeweils z. B. nach DIN EN 60529, erfüllen.

Um in der Umgebung des Bauroboters befindliche Personen und / oder Gegenstände zu schützen, kann die Hülle eine Dämpfungsschicht aus einem stoßdämpfenden Material aufweisen. Das stoßdämpfende Material kann ein Schaummaterial sein.

Alternativ oder ergänzend kann die Hülle auch ein Gel enthalten. Das Gel kann als stoßdämpfendes Material fungieren.

Die Hülle kann den Manipulator von der Umgebung des Bauroboters, zumindest teilweise, thermisch trennen. Dazu kann sie auch eine Temperierschicht aufweisen. Die Temperierschicht kann ein Material mit geringer Wärmeleitfähigkeit und / oder ein sichtbares Licht und / oder Wärmestrahlung reflektierendes Material aufweisen.

Die Hülle kann wenigstens eine Fluid-gefüllte Kammer aufweisen. Das Fluid kann unter Überdruck stehen, d. h. es kann einen einen Umgebungsdruck übersteigenden Druck aufweisen.

Beispielsweise kann die Hülle ein oder mehrere Luftkammern aufweisen. Eine solche fluidgefüllte Kammer, insbesondere eine Luftkammer, kann einen Teil der oder die gesamte Temperierschicht bilden. Sie kann alternativ oder ergänzend auch ein stoßdämpfendes Material sein.

Der Bauroboter, insbesondere der Temperierer, kann eine Wärmepumpe aufweisen, sodass der Energiebedarf des Temperierers minimiert sein kann. Auch dies kann somit zur Verlängerung der ununterbrochenen Nutzungsdauer des Bauroboters beitragen.

Die Hülle hüllt den Manipulator zumindest teilweise ein. Die Hülle kann über den Manipulator hinaus reichen. Insbesondere überdeckt sie zumindest bereichsweise die mobile Plattform und/ oder zumindest bereichsweise die Werkzeugmaschine. Somit kann der Temperierer auch die mobile Plattform und / oder die Werkzeugmaschine, zumindest bereichsweise, kühlen und / oder erwärmen.

Insbesondere im Falle, dass am Manipulator Wärme bereitzustellen ist, kann der Temperierer eingerichtet sein, eine Abwärme der Werkzeugmaschine und / oder eine Abwärme der mobilen Plattform und / oder eines anderen Elements des übrigen Bauroboters, an den Manipulator zu leiten.

Wirtschaftlichkeit und Verwendungsmöglichkeiten des Bauroboters lassen sich steigern, wenn ein kostengünstiger und / oder besonders leistungsfähiger Manipulator, beispielsweise ein Manipulator mit sechs oder mehr Freiheitsgraden, eingesetzt wird.

Dazu ist es denkbar, dass der Manipulator für sich genommen für einen zulässigen Temperaturbereich ausgelegt ist, der enger ist als der Temperaturbereich, für den der Bauroboter insgesamt ausgelegt ist. Der Manipulator kann dann dank des Temperierers in seinem zulässigen Temperaturbereich betrieben werden, auch wenn beispielsweise eine Umgebungstemperatur außerhalb dieses zulässigen Temperaturbereichs liegt. Daher ist es möglich einen Manipulator am Bauroboter vorzusehen, der zwar besondere mechanische Eigenschaften und Vorzüge aufweist, auch wenn sein zulässiger Temperaturbereich enger ist als der Temperaturbereich, in dem der Bauroboter eingesetzt werden soll.

Beispielsweise kann der Bauroboter zur Ausführung von Bauarbeiten in einem Umgebungstemperaturbereich von -2*10¹ °C bis 6 * 10¹ °C, insbesondere über wenigstens vier Stunden Betrieb ohne Unterbrechung, ausgelegt sein.

Die Werkzeugmaschine kann über eine Wechselschnittstelle mit dem Manipulator verbunden sein. Dann kann die Hülle auch die Wechselschnittstelle, zumindest teilweise, umhüllen.

Der Manipulator kann einen mehrachsigen Arm, beispielsweise mit wenigstens drei, vorzugsweise wenigstens sechs Freiheitsgraden, aufweisen. Zur Vergrößerung der Reichweite kann der Bauroboter eine Hubvorrichtung aufweisen.

Der Bauroboter kann zur Ausführung von Bauarbeiten auf einer Hochbau-Baustelle, einer Tiefbau-Baustelle und / oder einer Stahlbau-Baustelle, beispielsweise einer Ölbohrplattform, ausgebildet sein.

Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein.

Die mobile Plattform kann ein Räderfahrwerk und / oder ein Kettenfahrwerk umfassen. Die mobile Plattform kann wenigstens zwei Freiheitsgrade aufweisen. Es kann sich auch um eine Flugplattform handeln. Der Bauroboter kann insgesamt wenigstens zehn Freiheitsgrade aufweisen.

Der Bauroboter kann eine Steuerung aufweisen. Die Steuerung kann als Computer ausgebildet sein. Sie kann einen Prozessor, einen Speicherbaustein und / oder einen auf dem Prozessor ausführbaren Programmcode aufweisen. Der Prozessor kann ein oder mehrere Unterprozessoren aufweisen. Der Programmcode kann eingerichtet sein, bei Ausführung auf der Steuerung die mobile Plattform, den Manipulator und / oder die Werkzeugmaschine zu betreiben.

Denkbar ist auch eine **Verwendung eines Bauroboters** nach der vorangehend und / oder nachfolgend beschriebenen Art bei einer Umgebungstemperatur von über 40°C, insbesondere von über 50°C, wobei während des Betriebs des Bauroboters der Manipulator mithilfe des Temperierers gekühlt wird.

Insbesondere ist denkbar, den Bauroboter bei Bauarbeiten in Hitzeregionen, beispielsweise in nordafrikanischen, asiatischen, australischen, nordamerikanischen oder mittelamerikanischen Regionen, zu verwenden.

Denkbar ist auch eine Verwendung bei direkter, ungeschützter Sonneneinstrahlung. Dabei kann als Umgebungstemperatur in diesem Sinne auch eine Oberflächentemperatur einer dem Bauroboter nahen oder direkt angrenzenden Oberfläche gelten.

In analoger Weise ist es denkbar, einen solchen vorangehend und / oder nachfolgend beschriebenen Bauroboter bei einer Umgebungstemperatur von unter 0°C, insbesondere von unter -5°C, zu verwenden, wobei während des Betriebs des Bauroboters der Manipulator mithilfe des Temperierers erwärmt wird.

Allgemein kann er in einer Kälteregion, beispielsweise in einer nordamerikanischen und / oder einer asiatischen Kälteregion, oder in großer Höhe verwendet werden.

Bei der Werkzeugmaschine kann es sich um eine Steinbohrwerkzeugmaschine, eine Steinmeißelwerkzeugmaschine, ein Setzgerät, insbesondere zum Setzen von Nägeln, Schrauben und / oder Dübeln in ein Gestein, einer Trennwerkzeugmaschine, beispielsweise einer Steinsägewerkzeugmaschine, einer Schleifwerkzeugmaschine, beispielsweise einer Steinschleifwerkzeugmaschine, oder eine Presswerkzeugmaschine handeln.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung dargestellt und in der nachfolgenden Beschreibung näher erläutert.

### Es zeigen:

- Fig. 1: eine perspektivische Darstellung eines Bauroboters,
- Fig. 2: eine schematische Querschnittsansicht einer ersten Hülle und
- Fig. 3: eine schematische Querschnittsansicht einer zweiten Hülle.

In der nachfolgenden Beschreibung der Figuren werden zur Erleichterung des Verständnisses der Erfindung für gleiche oder sich funktional entsprechende Elemente jeweils die gleichen Bezugszeichen verwendet.

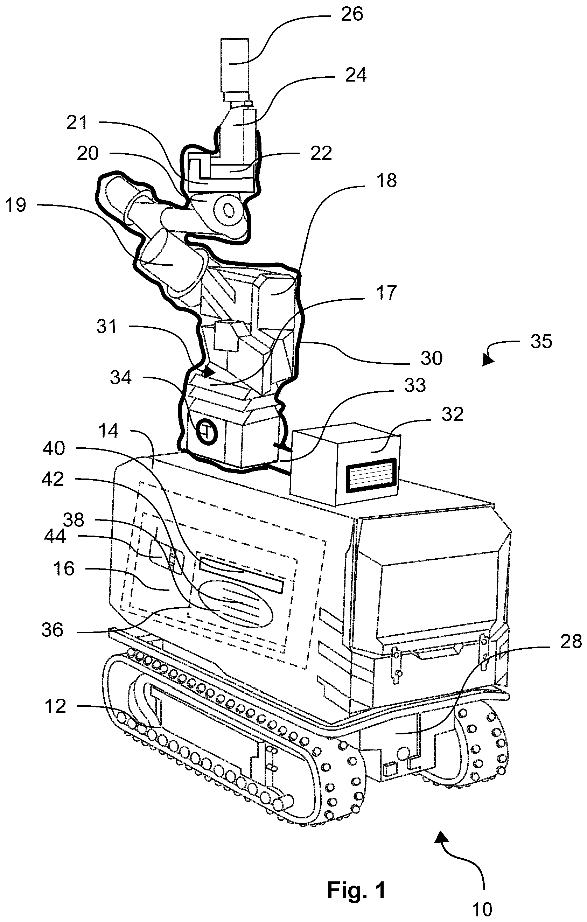

**Fig. 1** zeigt einen Bauroboter **10** mit einer als Kettenfahrwerk ausgebildeten motorisierten mobilen Plattform **12,** einem in einem Gehäuse **14** ausgebildeten Steuerraum **16** und einem oberseitig des Gehäuses 14 angeordneten Manipulator **18.** Der Manipulator 18 umfasst eine Hubvorrichtung **17** zur vertikalen Verlagerung und einen multiaxial, insbesondere in sechs Freiheitsgraden, steuerbaren Arm **19.**

Am freien Ende des Arms 19 befindet sich ein Endeffektor **20** mit einer Wechselschnittstelle **21.**

An der Wechselschnittstelle 21 ist eine Werkzeugmaschine **24,** insbesondere eine Gesteinsbohrwerkzeugmaschine, mit einer Staubabsaugungsvorrichtung **26,** lösbar angeordnet.

Um das Werkzeug 24 an der Wechselschnittstelle 21 lösbar anzuordnen, weist es einen Verbindungsabschnitt **22** auf.

Die Wechselschnittstelle 21 ist zur lösbaren Verbindung des Verbindungsabschnitts 22 und damit auch des Werkzeugs 24 ausgebildet.

Der Bauroboter 10 wird durch einen Speicher **28,** insbesondere in Form eines wiederaufladbaren, Lithium-basierten Akkumulators, mit Betriebsenergie versorgt. Er ist somit kabellos nutzbar.

Der Manipulator 18 ist von einer Hülle **30** umhüllt. Er befindet sich somit in einem Innenbereich **31** der Hülle 30. Eine Wärmepumpe **32** ist über einen Verbindungskanal **33** mit dem Innenbereich 31 der Hülle 30 verbunden. Somit kann der Innenbereich 31 und damit der darin befindliche Manipulator 18 durch die Wärmepumpe 32, insbesondere mittels eines temperierten Luftstroms, gekühlt oder erwärmt werden.

Ein Temperatursensor **34** misst eine Oberflächentemperatur des Manipulators 18. Die Wärmepumpe 32 ist eingerichtet, je nach gemessener Oberflächentemperatur zu kühlen, zu heizen oder in einen Ruhezustand zu wechseln, sodass die Oberflächentemperatur in einem Temperaturbereich zwischen 5°C bis 40°C gehalten wird. Dieser Temperaturbereich entspricht dem zulässigen Temperaturbereich des Manipulators 18.

Die Hülle 30, die Wärmepumpe 32, der Verbindungskanal 33 und der Temperatursensor 34 bilden einen Temperierer **35.**

Somit ist es beispielsweise möglich, den Bauroboter 10 im Winter im Freien, beispielsweise bei einer Umgebungstemperatur von weniger als 0°C, zur Ausführung von Bauarbeiten, insbesondere Bohrarbeiten, zu verwenden.

Der Bauroboter 10 weist, vorzugsweise innerhalb des Gehäuses 14, eine im Steuerraum 16 angeordnete Steuerung **36** auf. Die Steuerung 36 umfasst einen Speicherbaustein **38** und einen Mikroprozessor **40.**

Die Steuerung 36 ist mit ausführbarem Programmcode **42** ausgestattet. Der Programmcode 42 ist abrufbar und auf dem Mikroprozessor 40 ausführbar in dem Speicherbaustein 38 gespeichert. Über eine Kommunikationsschnittstelle **44** kann die Steuerung 36 ein Cloudbasiertes Rechnersystem (in Fig. 1 nicht dargestellt) kontaktieren und Daten, beispielsweise Daten zur Art auszuführender Bauaufgaben, zugehörige Positions- und / oder Lagedaten, beispielsweise in Form eines BIM-Modells und / oder in Form von CAD-Daten, und / oder Steuerbefehle, austauschen.

Der Bauroboter 10 ist zur Ausführung von Bauaufgaben, beispielsweise von Bohrarbeiten in Decken und Wänden, auf einer Baustelle, insbesondere auf einer Hochbau-Baustelle oder einer Tiefbau-Baustelle, ausgebildet. Insbesondere kann die Steuerung 36 den Manipulator 18 derart steuern, dass Bauarbeiten an Decken und Wänden ausführbar sind. Ein Beispiel einer solchen Bauaufgabe kann beispielsweise das Bohren eines Bohrlochs, insbesondere mit einer bestimmten Bohrtiefe und / oder einem bestimmten Bohrlochdurchmesser, in eine Betondecke mit der als Gesteinsbohrwerkzeugmaschine ausgebildeten Werkzeugmaschine 24 sein.

Die Hülle 30 kann eine ein- oder mehrschichtige Materialstruktur aufweisen. Sie kann beispielsweise außenseitig eine wasser- und schmutzabweisende Schicht aufweisen. Innenseitig kann sie ein Schaummaterial Stoßdämmung sowie zur thermischen Isolierung aufweisen.

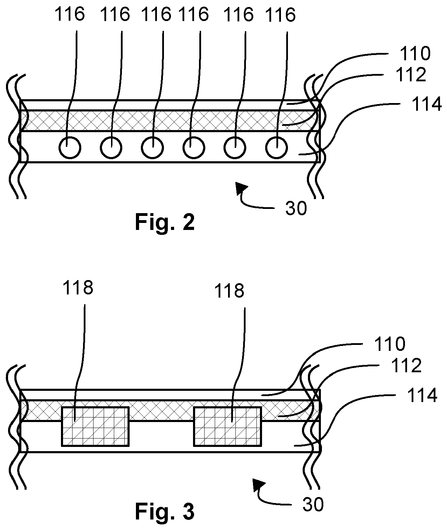

**Fig. 2** und **Fig. 3** zeigen schematisch und ausschnittsweise Querschnitte zweier alternativen Hüllen 30. Diese Ausführungsformen weisen jeweils mehrschichtige Materialstrukturen mit drei Schichten auf. Denkbar sind auch Hüllen 30 mit mehr als drei Schichten.

Bei beiden Ausführungen der Hüllen 30 ist außenseitig eine Deckschicht **110** vorgesehen. Die Deckschicht 110 weist Nanopartikel auf, die der Hülle 30 schmutz- und wasserabweisende Eigenschaften verleihen.

An die Deckschicht 110 grenzt eine Dämpfungsschicht **112** an. Die Dämpfungsschicht 112 ist aus einem stoßdämpfenden Schaummaterial geringer Wärmeleitfähigkeit ausgebildet.

Innenseitig weisen die Hüllen 30 eine Temperierschicht **114** auf. Die Temperierschichten 114 sind eingerichtet, aktiv zu kühlen und / oder zu wärmen. Bei Verwendung dieser Ausführungsformen der Hülle 30 gemäß Fig. 2 und 3 ist es somit nicht erforderlich, einen Luftstrom in den Innenraum 31 (siehe Fig. 1) strömen zu lassen, um den Manipulator 18 (siehe Fig. 1) zu temperieren.

Bei der Ausführungsform gemäß Fig. 2 weist die Temperierschicht 114 ein oder mehrere Leitungen **116** auf, die von einem entsprechend temperierten Fluid durchströmt werden können. Das Fluid kann dazu mithilfe der Wärmepumpe 32 (siehe Fig. 1) und / oder durch ein anderes Heiz- und / oder Kühlelement temperiert werden. Wird das Fluid auf eine solche andere Art temperiert, kann - je nach Bedarf an Kühlleistung oder Wärmeleistung - unter Umständen auf die Wärmepumpe 32 (siehe Fig. 1) verzichtet werden.

Bei der Ausführungsform gemäß Fig. 3 weist die Temperierschicht 114 Peltierelemente **118** auf. Die Peltierelemente 118 können mit elektrischem Strom beaufschlagt werden, sodass die Temperierschicht 114 gekühlt und / oder erwärmt werden kann.

Wird eine Hülle 30 nach Art dieser Ausführungsform, d. h. insbesondere mit Peltierelementen 118, verwendet, kann - je nach Bedarf an Kühlleistung oder Wärmeleistung - unter Umständen auf die Wärmepumpe 32 (siehe Fig. 1) verzichtet werden.

Um einen Wärmefluss durch die Peltierelemente 118 zu erleichtern, können diese - wie in Fig. 3 abgebildet - bis in die Dämpfungsschicht 112 oder sogar bis in die Deckschicht 110 hineinragen.

Die Hüllen 30 dieser beiden Ausführungsformen gemäß Fig. 2 bzw. Fig. 3 bieten somit die Möglichkeit aktiv zu temperieren.

Bei geeigneter Wahl der Materialien, der jeweiligen Dimensionen und der Verteilung über die Hülle 30 hinweg der Leitungen 116 bzw. der Piezoelemente 118, kann die Hülle 30 hinreichend flexibel verformbar sein, sodass, insbesondere mehrdimensionale, Bewegungen des Manipulators 18 (Fig. 1) nicht oder allenfalls in unwesentlichem Maße behindert werden.

Dennoch kann eine ausreichende Temperierleistung erreicht werden, sodass der Bauroboter 10 (Fig. 1) in zumindest fast allen Regionen der Welt zu allen Jahreszeiten und Tageszeiten verwendbar ist.

### Bezugszeichenliste

- 10: Bauroboter
- 12: mobile Plattform
- 14: Gehäuse
- 16: Steuerraum
- 17: Hubvorrichtung
- 18: Manipulator
- 19: Arm
- 20: Endeffektor
- 21: Wechselschnittstelle
- 22: Verbindungsabschnitt
- 24: Werkzeugmaschine
- 26: Staubabsaugungsvorrichtung
- 28: Speicher
- 30: Hülle
- 31: Innenbereich
- 32: Wärmepumpe
- 33: Verbindungskanal
- 34: Temperatursensor
- 35: Temperierer
- 36: Steuerung
- 38: Speicherbaustein
- 40: Mikroprozessor
- 42: Programmcode
- 44: Kommunikationsschnittstelle
- 110: Deckschicht
- 112: Dämpfungsschicht
- 114: Temperierschicht
- 116: Leitung
- 118: Peltierelement

## Patentansprüche

1. **Bauroboter (10),** insbesondere zur Ausführung von Bauarbeiten im Hochbau und / oder Tiefbau, umfassend eine mobile Plattform (12), beispielsweise ein Räderfahrwerk, ein Kettenfahrwerk oder eine Flugplattform, einen ein- oder mehrachsigen Manipulator (18) und eine am Manipulator (18) befindliche Werkzeugmaschine (24),
**dadurch gekennzeichnet,**
**dass** der Bauroboter (10) einen Temperierer (35) aufweist, der eingerichtet ist, den Manipulator (18) zu erwärmen, zu kühlen und / oder eine Temperatur des Manipulators (18) in einem Temperaturbereich zu halten und der Bauroboter (10) hierfür einen Temperatursensor (34) zur Messung einer Temperatur des Bauroboters (10) und / oder einer Umgebung des Bauroboters (10) aufweist; und
**dass** der Temperierer (35) eine Hülle (30) umfasst, die den Manipulator (18) zumindest teilweise einhüllt, wobei
die Hülle (30) zumindest teilweise die mobile Plattform (12) überdeckt und/ oder zumindest teilweise die Werkzeugmaschine (24) überdeckt.

2. Bauroboter nach Anspruch 1, **dadurch gekennzeichnet, dass** die Hülle (30) eine Nanopartikel-haltige Schicht aufweist.

3. Bauroboter nach Anspruch 1 oder 2, **dadurch gekennzeichnet, dass** die Hülle (30) eine Dämpfungsschicht (112) aus einem stoßdämpfenden Material aufweist.

4. Bauroboter nach einem der vorhergehenden Ansprüche 1 bis 3, **dadurch gekennzeichnet, dass** die Hülle (30) eine Temperierschicht (114) aufweist.

5. Bauroboter nach einem der vorhergehenden Ansprüche, **dadurch gekennzeichnet, dass** der Bauroboter (10) eine Wärmepumpe (32) aufweist.

6. Bauroboter nach einem der vorhergehenden Ansprüche, **dadurch gekennzeichnet, dass** der Manipulator (18) für sich genommen für einen zulässigen Temperaturbereich ausgelegt ist, der enger ist als der Temperaturbereich, für den der Bauroboter (10) insgesamt ausgelegt ist.

## Claims

1. Construction robot (10), in particular for carrying out construction work on a building construction site and/or a civil engineering construction site, comprising a mobile platform (12), for example a wheeled undercarriage, a track-chain undercarriage or a flying platform, a single-axis or multi-axis manipulator (18), and a power tool (24) situated on the manipulator (18),
**characterized**
**in that** the construction robot (10) has a temperature-control means (35) that is configured to heat or cool the manipulator (18) and/or keep a temperature of the manipulator (18) in a temperature range and, for this purpose, the construction robot (10) has a temperature sensor (34) for measuring a temperature of the construction robot (10) and/or of the surroundings of the construction robot (10); and
**in that** the temperature-control means (35) comprises a sleeve (30) that at least partially encases the manipulator (18), wherein
the sleeve (30) at least partially covers the mobile platform (12) and/or at least partially covers the power tool (24).

2. Construction robot according to Claim 1, **characterized in that** the sleeve (30) has a layer comprising nanoparticles.

3. Construction robot according to Claim 1 or 2, **characterized in that** the sleeve (30) has a cushioning layer (112) made of a shock-absorbing material.

4. Construction robot according to one of preceding Claims 1 to 3, **characterized in that** the sleeve (30) has a temperature-control layer (114).

5. Construction robot according to one of the preceding claims, **characterized in that** the construction robot (10) has a heat pump (32).

6. Construction robot according to one of the preceding claims, **characterized in that** the manipulator (18), considered individually, is designed for an admissible temperature range that is narrower than the temperature range for which the construction robot (10) as a whole is designed.

## Revendications

1. Robot de construction (10), en particulier pour la réalisation de travaux de construction en construction immobilière et/ou en génie civil, comprenant une plateforme mobile (12), par exemple un train de roulement à roues, un train de roulement à chenilles ou une plateforme de vol, un manipulateur (18) mono- ou multiaxial et une machine-outil (24) située sur le manipulateur (18),
**caractérisé en ce**
**que** le robot de construction (10) comporte un régulateur de température (35), qui est mis au point pour chauffer, refroidir le manipulateur (18) et/ou pour maintenir une température du manipulateur (18) dans une plage de températures et le robot de construction (10) comporte à cet effet un capteur de température (34) destiné à mesurer une température du robot de construction (10) et/ou d'un environnement du robot de construction (10) ; et
**que** le régulateur de température (35) comprend une enveloppe (30), qui enveloppe au moins en partie le manipulateur (18),
l'enveloppe (30) recouvrant au moins en partie la plateforme mobile (12) et/ou recouvrant au moins en partie la machine-outil (24).

2. Robot de construction selon la revendication 1, **caractérisé en ce que** l'enveloppe (30) comporte une couche contenant des nanoparticules.

3. Robot de construction selon la revendication 1 ou 2, **caractérisé en ce que** l'enveloppe (30) comporte une couche d'amortissement (112) en un matériau amortissant les chocs.

4. Robot de construction selon l'une des revendications précédentes 1 à 3, **caractérisé en ce que** l'enveloppe (30) comporte une couche de régulation de température (114).

5. Robot de construction selon l'une des revendications précédentes, **caractérisé en ce que** le robot de construction (10) comporte une pompe à chaleur (32).

6. Robot de construction selon l'une des revendications précédentes, **caractérisé en ce que** le manipulateur (18), pris isolément, est conçu pour une plage de températures admissible qui est plus étroite que la plage de températures pour laquelle le robot de construction (10) est conçu dans son ensemble.
